Europäisches Patentamt

European Patent Office

Office européen des brevets

(11) Numéro de publication: **0 188 140**
**B1**

(12) **FASCICULE DE BREVET EUROPEEN**

(45) Date de publication du fascicule du brevet:
**28.12.88**

(21) Numéro de dépôt: **85402281.1**

(22) Date de dépôt: **22.11.85**

(51) Int. Cl.⁴: **F 16 J 15/32**

(54) Joint d'étanchéité à lèvre pour arbre tournant.

(30) Priorité: **22.11.84 FR 8417814**

(43) Date de publication de la demande:
**23.07.86 Bulletin 86/30**

(45) Mention de la délivrance du brevet:
**28.12.88 Bulletin 88/52**

(84) Etats contractants désignés:
**DE IT SE**

(56) Documents cités:
**FR-A- 2 078 698**
**US-A- 3 110 095**

(73) Titulaire: **HUTCHINSON, 2 rue Balzac, F-75008 Paris (FR)**

(72) Inventeur: **Braut, Patrick, 31, rue de Sainte Emerance la Poueze, F-49370 Le Louroux Beconnais (FR)**
Inventeur: **Crapart, René, Bauné Sainte Gemmes d'Andigné, F-49500 Segre (FR)**

(74) Mandataire: **Picard, Jean-Claude Georges et al, Cabinet Plasseraud 84, rue d'Amsterdam, F-75009 Paris (FR)**

ACTORUM AG

## Description

La présente invention concerne un joint d'étanchéité à lèvre pour arbre tournant, du type comportant une partie périphérique extérieure de fixation, destinée à être introduite dans un logement d'une partie fixe, et une lèvre radialement intérieure reliée à ladite partie périphérique et dont une arête d'étanchéité est destinée à venir en contact avec appui élastique à la périphérie d'un arbre tournant, pour assurer l'étanchéité entre cet arbre et ladite partie fixe.

Le document FR-A-2 078 698 décrit une garniture d'étanchéité pourvue d'au moins une saillie annulaire rigide, située à l'une de ses extrémités et ayant un diamètre interne légèrement supérieur au diamètre interne de la lèvre élastique de manière à constituer un appui pour l'arbre à monter lorsque ce dernier subit un déplacement excentrique de manière a éviter les deformations excessives de la lèvre élastique au cours du montage. Cependant cette solution n'est pas entièrement satisfaisante, car la lèvre élastique peut encore être endommagée lors du montage.

Le but de la présente invention est d'apporter à ce type de joints des perfectionnements propres à éliminer les défauts qui peuvent les affecter du fait même des conditions dans lesquelles se déroulent les opérations de montage du joint sur l'arbre ou de l'arbre dans le joint.

La lèvre précitée peut en effet être coupée ou autrement détériorée au passage d'une arête vive de l'arbre (du fait de cannelures, trous, chanfreins, etc.), et ne peut plus alors assurer parfaitement sa fonction d'étanchéité.

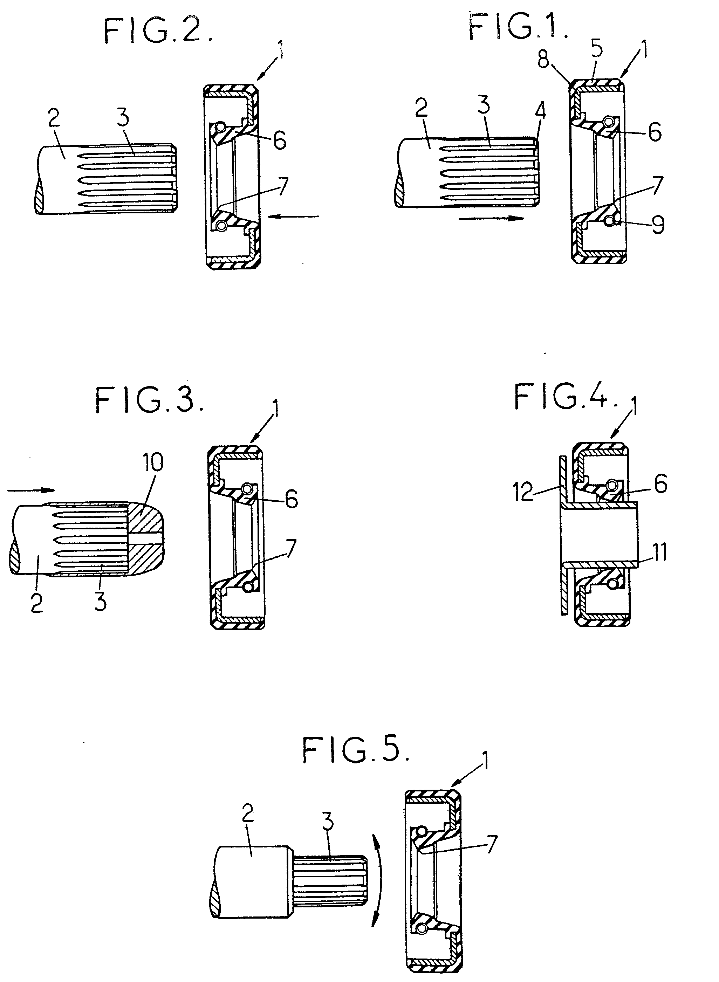

La figure 1 montre en coupe axiale un joint 1 du type général concerné par la présente invention, supposé assujetti à une partie fixe (non représentée), mais auquel joint les perfectionnements de l'invention n'ont pas été apportés, ainsi qu'un bout d'arbre cannelé 2, destiné à être engagé dans le joint, les cannelures de l'arbre étant référencées en 3, et un chanfrein en 4.

Sur les différentes figures, on a pris partout les mêmes références pour désigner les mêmes parties ou éléments des joints connus ou du joint conforme à la présente invention:

— 5 désigne la partie périphérique extérieure de fixation, destinée à être introduite dans un logement de la partie fixe précitée;

— 6 désigne la lèvre radialement intérieure, faisant suite à la partie 5;

— 7 désigne l'arête d'étanchéité de la lèvre destinée à venir élastiquement en contact avec la partie lisse de l'arbre 2 et, ainsi, à assurer l'étanchéité entre l'arbre et ladite partie fixe;

— 8 désigne une armature métallique interne; et

— 9 une bague élastique.

Ceci étant, on voit sur la figure 1 qu'avec ce type de joint connu la lèvre 7 risque d'être blessée par le chanfrein 4 et par les arêtes des cannelures 3 lors de l'introduction, dans le sens de la flèche, de l'arbre 2 dans le joint 1.

Dans le cas de la figure 2, l'arbre 2 étant supposé fixe, on voit qu'il y a en outre un risque de retournement de la lèvre 6 lors de l'engagement du joint 1 sur l'arbre.

Pour remédier à ces inconvénients, on a envisagé d'emmancher un embout de protection arrondi à surface polie 10 en bout d'arbre, pour masquer son extrémité ainsi que les cannelures 3 (voir figure 3). Il faut cependant que cet embout puisse être retiré lorsque le joint est en place, ce qui est contraignant.

De plus, sur les chaînes de montage, le même embout est utilisé des milliers de fois et peut tomber. L'empreinte des chocs et les copeaux qui s'y collent peuvent alors à leur tour endommager l'arête d'étanchéité 7 du joint 1 lors du montage.

On peut encore envisager (figure 4) de livrer chaque joint 1 avec une bague de protection en matière plastique dont le tube 11 a un diamètre supérieur à celui de l'arbre 2. On voit que la collerette 12 de la bague n'empêche pas le montage du joint 1 dans son logement; elle permet à la bague d'être extraite après montage du joint 1 sur l'arbre 2.

L'extraction peut se faire soit axialement, soit radialement après coupure de la bague en deux.

Toutefois, une telle bague n'est pas toujours très facile à retirer et le risque d'oublier son extraction n'est pas négligeable, surtout lors de montages effectués en série.

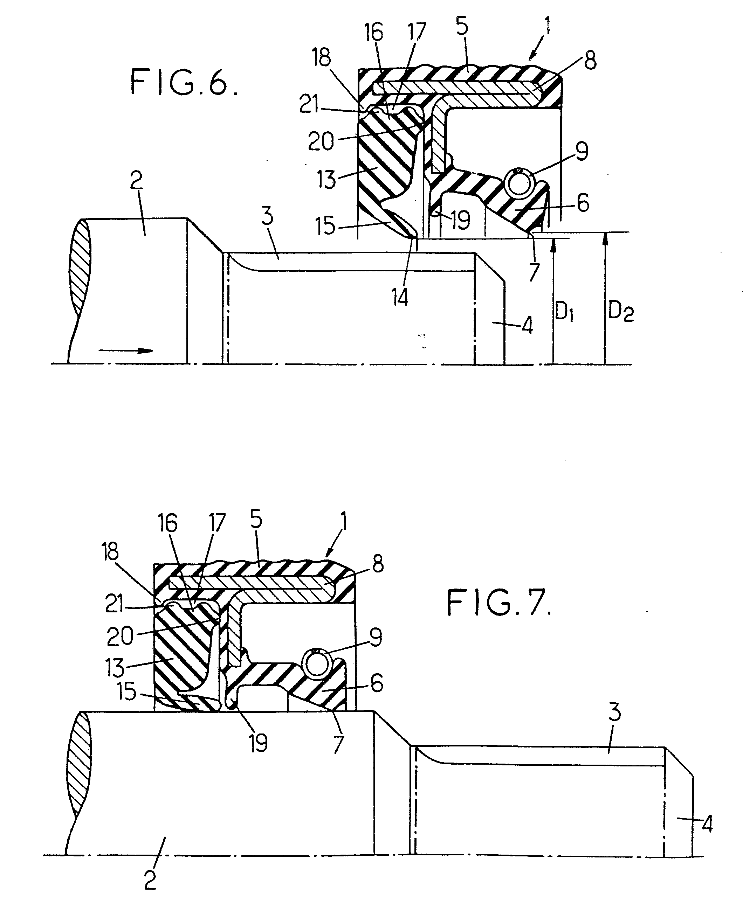

Selon encore une autre solution connue, on essaie de mettre à profit le fait, fréquent, que l'extrémité cannelée de l'arbre 2 est d'un diamètre nettement inférieur à celui de la partie lisse de l'arbre (figure 5). Cette caractéristique, cependant, est insuffisante pour éliminer tout risque de coupure de l'arête d'étanchéité 7 lors du montage, l'arbre n'étant pas assuré d'être correctement guidé.

Pour remédier à ces divers inconvénients de la technique antérieure, un joint du type général défini au début sera, conformément à l'invention, essentiellement caractérisé en ce qu'il comporte en avant de ladite lèvre, eu égard au sens du déplacement axial relatif de l'arbre par rapport au joint lors des opérations de montage, une bague protectrice et autocentreuse en une matière relativement rigide mais déformable, l'arête de la lèvre radialement intérieure de cette bague ayant à l'état libre un diamètre inférieur à celui que présente, également à l'état libre, ladite arête d'étanchéité.

Cette bague autocentreuse étant devant l'arête d'étanchéité la protégera de toute détérioration en guidant et en centrant parfaitement l'arbre lors du montage. De plus, cette bague présentera le grand avantage de n'avoir pas besoin d'être retirée, car elle ne gênera ni le fonctionnement du joint ni la rotation de l'arbre.

Un mode d'exécution de l'invention va maintenant être décrit, à titre d'exemple nullement limitatif, avec référence aux figures du dessin annexé dans lequel:

— la figure 6 est une demi-coupe axiale d'un joint conforme à l'invention avant introduction de la partie lisse d'un arbre 2; et

— la figure 7 est une vue semblable à celle de la figure 6, après montage.

Sur les figures 6 et 7, la bague protectrice et autocentreuse a été référencée en 13. A l'état libre qui est représenté à la figure 6, on voit que le diamètre D1 de l'arête 14 de la lèvre radialement intérieure 15 de cette bague est inférieur au diamètre D2 de l'arête d'étanchéité 7 du joint, grâce à quoi, lors de l'introduction de la partie cannelée 3, l'arbre ne risque pas d'endommager ladite lèvre 7, étant parfaitement guidé et autocentré par la lèvre 15.

Après montage (figure 7), on voit que la lèvre 15 présente une surface de contact notable avec la surface lisse de l'arbre 2, mais ceci est sans importance car la bague 13 est entraînée en rotation avec l'arbre.

A cet effet, selon une caractéristique complémentaire de l'invention, la partie périphérique extérieure 16 de la bague 13 est retenue axialement, avec un minimum de frottements, dans une cage 17, délimitée par un rebord 18, de ladite partie périphérique extérieure de fixation 5 du joint 1. Le rebord 18 peut coopérer avec une nervure périphérique 21 de la bague.

On voit que la bague 13 ne gêne en rien le fonctionnement du joint.

On note qu'en outre la lèvre 15 peut après montage servir de déflecteur vis-à-vis des impuretés extérieures, renforçant ainsi le rôle de la lèvre antipoussière classique 19 du joint 1.

Le matériau constituant la bague 13 sera, comme indiqué plus haut, relativement rigide, pour remplir correctement son rôle de guidage, et devra avoir en outre une bonne tenue à la température, ainsi qu'un coefficient de frottement aussi bas que possible vis-à-vis de l'élastomère constituant le joint 1, et bien entendu une bonne résistance à l'usure.

On pourra utiliser à cet effet du polyéthylène ou analogue, pour la bague 13, le joint 1 étant en toute matière appropriée, par exemple en polyacrylate.

De toute manière, on pourra prévoir, pour diminuer les frottements entre bague et joint, qu'à l'emplacement de leur contact axial mutuel la bague 13 (ou le joint) porte une surface de butée 20, laquelle peut d'ailleurs être revêtue d'une couche de matériau diminuant encore les frottements.

Enfin, il est à noter que la bague 13 peut être rendue plus rigide par adjonction d'une armature interne métallique (non représentée).

## Revendications

1. Joint d'étanchéité à lèvre pour arbre tournant, du type comportant une partie périphérique extérieure de fixation (5), destinée à être introduite dans un logement d'une partie fixe, et une lèvre radialement intérieure (6) reliée à ladite partie périphérique et dont une arête (7) d'étanchéité est destinée à venir en contact avec appui élastique à la périphérie d'un arbre tournant (2), pour assurer l'étanchéité entre cet arbre et ladite partie fixe, caractérisé en ce qu'il comporte en avant de ladite lèvre (6), eu égard au sens du déplacement axial relatif de l'arbre (2) par rapport au joint (1) lors des opérations de montage, une bague protectrice et autocentreuse (13) en une matière relativement rigide mais déformable, l'arête (14) de la lèvre radialement intérieure (15) de cette bague ayant à l'état libre un diamètre inférieur à celui que présente, également à l'état libre, ladite arête d'étanchéité (7).

2. Joint selon la revendication 1, caractérisé en ce que la partie périphérique extérieure (16) de ladite bague (13) est retenue axialement, de façon à pouvoir y tourner, dans une cage (17) de ladite partie périphérique extérieure de fixation (5).

3. Joint selon la revendication 2, caractérisé en ce que ladite cage (17) est délimitée par un rebord (18) coopérant avec une nervure périphérique (21) de ladite bague (13).

4. Joint selon la revendication 2 ou 3, caractérisé en ce qu'à l'emplacement de leur contact axial mutuel, la bague (13) (ou le joint (1) ) porte une surface de butée à frottement localisé (20).

5. Joint selon l'une quelconque des revendications précédentes, caractérisé en ce que la matière constituant ladite bague (13) protectrice et autocentreuse a un faible coefficient de frottement sur la matière constituant le joint proprement dit (1).

## Patentansprüche

1. Lippendichtung für eine drehende Welle des Typs mit einem Umfangsteil (5) zur Aussenbefestigung, der zum Einsetzen in den Sitz eines feststehenden Teils dient, und mit einer radialen inneren Lippe (6), die mit dem Umfangsteil verbunden ist und deren eine Dichtkante (7) am Umfang einer drehenden Welle (2) mit elastischer Abstützung zur Anlage kommt, um so die Dichtung zwischen der Welle (2) und dem feststehenden Teil sicherzustellen, dadurch gekennzeichnet, dass die Dichtung (1) hinsichtlich der Richtung ihrer relativen axialen Verschiebung zur Welle (2) hin während der Montage vor der Lippe (6) einen selbstzentrierenden Schutzring (13) aus einem relativ steifen, jedoch verformbaren Material aufweist, wobei die Kante (14) der radialen inneren Lippe (15) dieses Ringes (13) im unbelasteten Zustand einen kleineren Durchmesser hat als die Dichtkante (7), ebenfalls im unbelasteten Zustand.

2. Dichtung nach Anspruch 1, dadurch gekennzeichnet, dass der periphere Aussenteil (16) des Ringes (13) axial in einem Käfig (17) des Umfangsteils (5) zur Aussenbefestigung derart gehalten ist, dass er drehbar ist.

3. Dichtung nach Anspruch 2, dadurch gekennzeichnet, dass der Käfig (17) durch einen erhöhten Rand (18) begrenzt ist, der mit einer Umfangsrippe (21) des Ringes (13) zusammenwirkt.

4. Dichtung nach Anspruch 2 oder 3, dadurch gekennzeichnet, dass an der Stelle ihres gegenseitigen axialen Kontaktes der Ring (13) (oder die Dichtung (1) ) eine Anlagefläche (20) mit begrenzter Reibung aufweist.

5. Dichtung nach einem der vorhergehenden Ansprüche, dadurch gekennzeichnet, dass das Material, aus dem der selbstzentrierende Schutzring (13) besteht, auf dem Material, welches die eigentliche Dichtung (1) bildet, einen niedrigen Reibungskoeffizienten hat.

## Claims

1. Lip seal for a rotating shaft, of the type comprising an outer peripheral fastening part (5), intended for being introduced into the housing of a stationary part, and a radially inner lip (6) connected with said peripheral part and of which a sealing edge (7) is intended for resiliently contacting the periphery of the rotating shaft (2), in order to ensure the tightness between this shaft and said stationary part, characterized in that it comprises before said lip (6), considering the direction of relative axial displacement of shaft (2) with respect to seal (1) during the mounting operations, a protective and self-centering ring (13) made of a relatively rigid, although distortable, material, whereby the edge (14) of the radially inner lip (15) of this ring has in its free state a diameter smaller than the one of the said sealing edge (7), also in its free state.

2. Seal according to claim 1, characterized in that the outer peripheral part (16) of said ring (13) is axially retained, in such a manner to be capable of rotating therein, inside a retainer (17) of said outer peripheral fastening part (5).

3. Seal according to claim 2, characterized in that said retainer (17) is limited by a shoulder (18) cooperating with a peripheral rib (21) of said ring (13).

4. Seal according to claim 2 or 3, characterized in that at the location of their mutual axial contact, the ring (13) (or the seal (1)) bears a stop surface with localized friction (20).

5. Seal according to any one of the foregoing claims, characterized in that the material constituting said protective and self-centering ring (13) has a low friction coefficient with respect to the material the seal proper (1) is made of.

1/2

FIG.2.

FIG.1.

FIG.3.

FIG.4.

FIG.5.

EP 0 188 140 B1

2/2

FIG.6.

FIG.7.

7